# EUROPEAN PATENT APPLICATION

(11) **EP 1 860 355 A1**
(43) Date of publication of application: **28.11.2007**
(21) Application number: 06728674.0
(22) Date of filing: 07.03.2006
(51) Int. Cl.: F16J 15/32, F16D 25/12

(54) **SEALING DEVICE**

(30) Priority: 16.03.2005 JP 2005074853
(71) Applicant: NOK Corporation, Minato-ku Tokyo 105-8585 (JP)
(72) Inventor: KANZAKI, Yoshiyuki, Fukushima-shi, Fukushima, 9601102 (JP)
(74) Representative: TBK-Patent
(86) International application number: PCT/JP2006/304305
(87) International publication number: WO 2006/098184

(57) **Abstract**

A sealing device (1) in which, even when a seal member (6) having a core metal (4) and a sealing section (5) is fitted on a piston member (3) that axially reciprocates in a bottomed circular cylinder (2), force required for the fitting can be suppressed to a low level and as a result the core metal (4) of the seal member (6) is not deformed. The wall thickness of a circular cylindrical portion (42), fitted on the piston member (3), of the core metal (4) is reduced to provide the circular cylindrical portion with spring properties. Alternately, slits (44) are equally arranged on the circumference of the circular cylindrical portion (42) of the core metal (4) or, alternatively, the circular cylinder portion (42) is constructed from claws (45).

## Description

### BACK GROUND OF THE INVENTION

### Field of the Invention

The present invention relates to a sealing device in which a sealing performance is secured by a seal member provided in a piston member reciprocating within a cylinder in accordance with a hydraulic control.

### Description of the Conventional Art

Since an automatic transmission such as an AT, a CVT and the like for a motor vehicle recently tends to be formed in multiple stages, and an FF type (a front-wheel drive type) has a restriction in space in an axial direction, a bonded piston seal (BPS) tends to be enlarged in size, particularly, in the AT having a high capacity. Conventionally, since the BPS is structured by vulcanizing and adhering a seal portion to a piston member, there is generated a necessity for enlarging a metal mold for vulcanizing and adhering in accordance with the enlargement in size of the BPS. Accordingly, there is a problem that a manufacturing cost is increased.

As a countermeasure thereof, in the following patent document 1, there is proposed a structure in which only a seal portion is separated from a piston member, and a seal member obtained by vulcanizing and adhering a sealing portion to a core metal is fitted to the piston member.

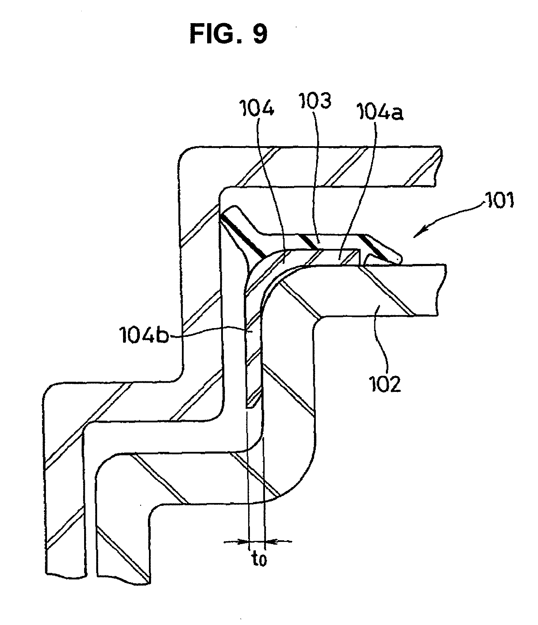

However, as shown in Fig. 9, in order to attach a seal member 101 to a piston member 102, a core metal 104 to which a sealing portion 103 is adhered is fitted to the piston member 102. However, since a thickness to of the core metal 104 is identical between a flange portion 104a and a cylindrical portion 104b and is thick, a fitting and installing force at a time of fitting the core metal 104 to the piston member 102 becomes high, and the fitting and installing force itself has a large dispersion. Therefore, there is a problem that the core metal 104 is deformed.

Further, in order to suppress the dispersion of the fitting and installing force, it is necessary to severely control a tolerance of a fitting dimension of the piston member and the core metal, and it is necessary to execute an additional work such as a lathe turning or the like and improve a working precision for achieving the control. There is a problem that a manufacturing cost is increased. Further, if the fitting and installing force is high, it is necessary to enlarge an output of a relative facility for attaching the core metal to the piston member. Accordingly, there is a problem that the manufacturing cost is increased.

Patent Document 1: Japanese Unexamined Patent Publication No. 2003-139249

The present invention is made by taking the points mentioned above into consideration, and an object of the present invention is to provide a sealing device which can hold down a fitting and installing force even in the case of attaching a seal member to a piston member in accordance with a fitting, and can prevent a core metal of the seal member from being deformed.

### SUMMARY OF THE INVENTION

In order to achieve the object mentioned above, in accordance with a first aspect of the present invention, there is provided a sealing device in which a seal member provided with a core metal and a sealing portion is fitted to a piston member reciprocating in an axial direction within a bottomed cylinder, wherein a spring characteristic caused by thinning is applied to a cylindrical portion of the core metal fitted to the piston member.

Further, in accordance with a second aspect of the present invention, there is provided a sealing device as recited in the first aspect, wherein slits are provided at the cylindrical portion of the core metal so as to be uniformly arranged on a circumference, or wherein the cylindrical portion of the core metal is formed by claws.

Further, in accordance with a third aspect of the present invention, there is provided a sealing device as recited in the first aspect or the second aspect, wherein a convex portion is provided at the cylindrical portion of the core metal, and a concave portion with which the convex portion is engaged is provided at the piston member.

### Effect of the Invention

The present invention achieves the following effects.

In accordance with the sealing device on the basis of the first aspect of the present invention provided with the structure mentioned above, since the spring characteristic caused by thinning is applied to the cylindrical portion of the core metal, it is possible to reduce a fitting and installing force (an assembling load) at a time of fitting the core metal for attaching the seal member to the piston member. Accordingly, it is possible to prevent the core metal from being deformed.

Further, in accordance with the sealing device provided with the structure of the second aspect, since the slits are provided at the cylindrical portion of the core metal so as to be arranged uniformly, or the cylindrical portion is formed by the claws, it is possible to further reduce the fitting and installing force at a time of fitting the core metal for attaching the seal member to the piston member.

Further, in accordance with the sealing device provided with the structure of the third aspect, since the convex portion is provided at the cylindrical portion, and the piston member is provided with the concave portion with which the convex portion is engaged, it is possible to securely prevent the seal member from coming off from the piston member which may be caused by a reduction of a come-off preventing force due to the reduction of the fitting and installing force, and it is possible to dramatically improve a breakaway load.

### BRIEF EXPLANATION OF THE DRAWINGS

Fig. 1 is a cross sectional view of a main portion of a sealing device in accordance with the present invention;
Fig. 2 is a front view of an example 1 of a seal member in Fig. 1;
Fig. 3 is a front view of an example 2 of the seal member in Fig. 1;
Fig. 4 is a front view of an example 3 of the seal member in Fig. 1;
Fig. 5 is a cross sectional view of a main portion showing a fitting state in accordance with an embodiment 2 which is different from Fig. 1;
Fig. 6 is a cross sectional view of a main portion of a concave portion in accordance with an embodiment 3 which is different from Fig. 4;
Fig. 7 is a cross sectional view of a main portion showing a fitting state in accordance with an embodiment 4 which is different from Fig. 1;
Fig. 8 is a cross sectional view of a main portion showing a fitting state in accordance with an embodiment 5 which is different from Fig. 1; and
Fig. 9 is a cross sectional view of a main portion of a sealing device in accordance with a conventional art.

### Explanation of the reference numerals

- 1: sealing device
- 2: cylinder
- 3: piston member
- 31, 41: flange portion
- 32, 42: cylindrical portion
- 33: concave portion
- 4: core metal
- 40: hole
- 43: corner portion
- 44: slit
- 45: claw
- 46: convex portion
- 47, 47A, 47B: fitting position
- 5: sealing portion
- 51, 52: seal lip
- 6: seal member

### DETAILED DESCRIPTION OF PREFERRED EMBODIMENT

A description will be given below of preferred embodiments for carrying out the invention by exemplification with reference to the accompanying drawings. In this case, a range of the invention is not limited to the contents described in those embodiments unless any specific limited description is given.

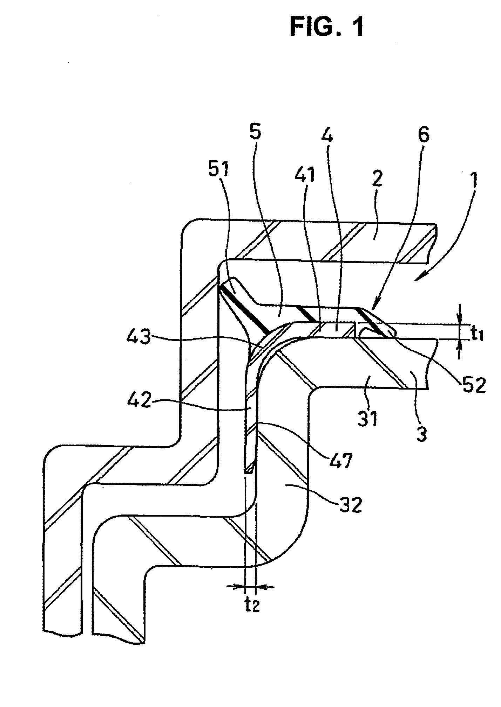

Fig. 1 is a cross sectional view of a sealing device in accordance with an embodiment for carrying out the present invention which is installed to a piston member reciprocating in an axial direction within a cylinder.

A sealing device 1 in accordance with the present invention is structured such as to be attached to a piston member 3 which reciprocates in an axial direction within a bottomed cylinder 2 so as to seal between the cylinder 2 and the piston member 3, as shown in Fig. 1, and is constituted by a seal member 6 provided with a core metal 4 and a sealing portion 5.

The core metal 4 is a metal plate obtained by integrally forming a flange portion 41 positioned at an outer side (an upper side in the drawing) in an axial direction of a flange portion 31 positioned at an innermost diameter side of a step-shaped piston member 3, a cylindrical portion 42 extending to an axial direction (a lower side in the drawing) from an outer diameter side end portion of the flange portion 41 and fitted to a cylindrical portion 32 positioned at an innermost diameter side of the step-shaped piston member 3, and a corner portion 43 positioned at the midpoint of the flange portion 41 and the cylindrical portion 42, and has an approximately L-shaped cross section.

A thickness of the core metal 4 is formed in such a manner that a thickness t₂ of the cylindrical portion 42 is thinner than a thickness t₁ of the flange portion 41 and the corner portion 43. Specifically, it is preferable that the core metal 4 is formed in such a manner as to satisfy a relation t₂ ≦ 0.6t₁. Accordingly, a spring elasticity is applied to the cylindrical portion 42 fitted to the piston member 3.

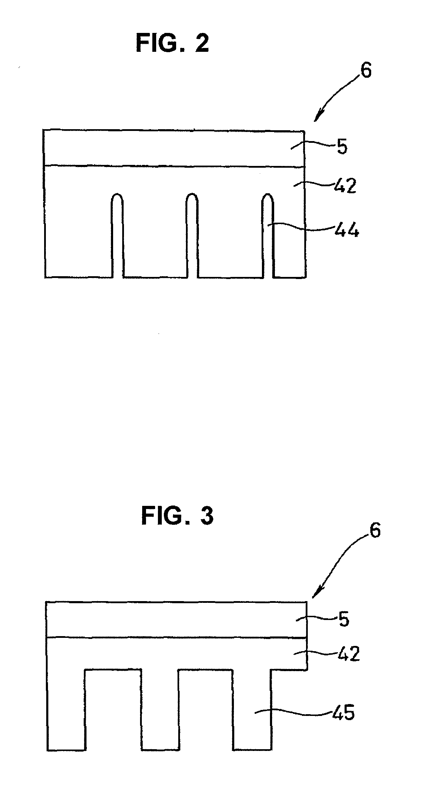

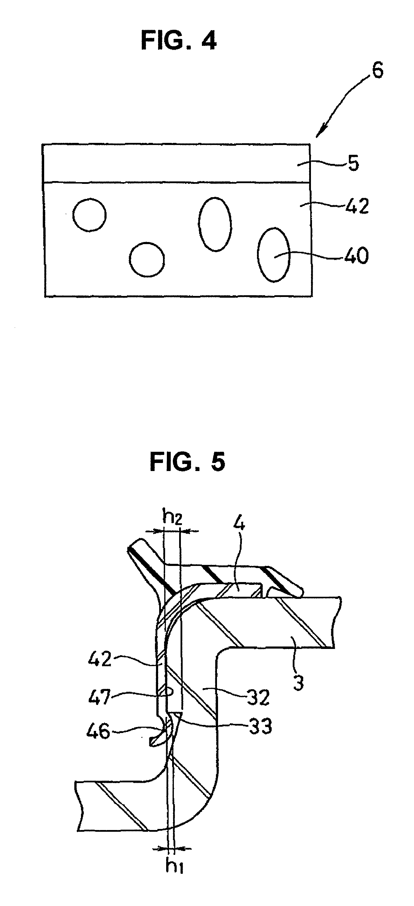

In order to further apply the spring elasticity, as shown in Fig. 2, slits 44 arranged uniformly on a circumference are formed at the cylindrical portion 42 of the core metal 4. In this case, as shown in Fig. 3, the spring elasticity may be applied by forming the cylindrical portion 42 by claws 45 in place of the slits 44. Further, as shown in Fig. 4, in the case that the spring elasticity is applied by forming circular or oval holes 40 at the cylindrical portion 42, it is possible to achieve a cost reduction for a press molding. A shape of the hole is not limited to the circular shape and the oval shape, but may employ a triangular shape or a rectangular shape.

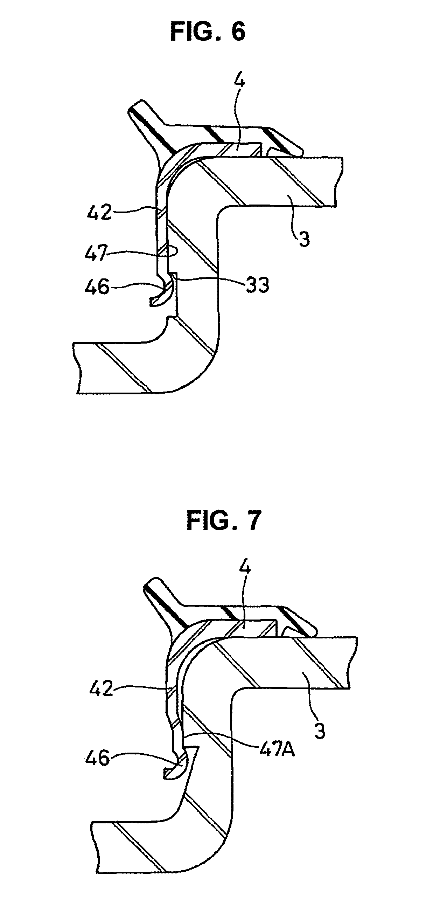

Further, in order to prevent the seal member 6 from coming off from the piston member 3 due to a reduction of the fitting and installing force of the cylindrical portion 42, a convex portion 46 is formed near an end portion in an axial direction of the cylindrical portion 42 of the core metal 4, and a concave portion 33 engaging with the convex portion 46 is formed on an outer diameter surface of the cylindrical portion 32 of the piston member 3 over a whole circumference, as shown in Fig. 5. In this case, as a shape of the concave portion 33, whatever shape may be employed as far as the shape engages with the convex portion 46. In addition to a wedge shape, a rectangular shape as shown in Fig. 6 is normally employed. A height h₁ of the convex portion 46 and a depth h₂ of the concave portion 33 with which the convex portion 46 is engaged are determined by taking into consideration a fitting and installing force and a strength of the core metal 4. It is preferable that the height h₁ of the convex portion 46 is between 0.2 and 0.3 mm, and the depth h₂ of the concave portion is 0.4 mm or more.

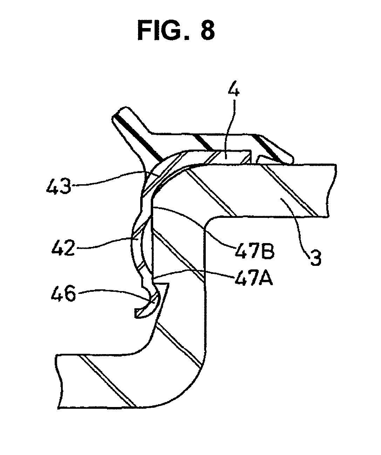

In this case, a fitting position 47 at which an outer diameter surface of the cylindrical portion 32 of the piston member 3 is fitted to an inner diameter surface of the cylindrical portion 42 of the core metal 4 may be constituted by a whole surface of the inner diameter surface of the cylindrical portion 42, as shown in Figs. 1, 5 and 6, and may be constituted only by a portion 47A near a portion, in which the convex portion 46 at an inner side in the axial direction is formed, for the purpose of reducing the assembling load, as shown in Fig 7. Further, as shown in Fig. 8, the structure may be made such that a portion 47B near the axial outer corner portion 43 and the portion 47A at the inner side in the axial direction are fitted for the purpose of improving a shaft eccentricity precision.

To an outer side in the axial direction of the flange portion 41 and the corner portion 43 of the core metal 4, there is vulcanized and adhered the sealing portion 5 of the rubber-like elastic material obtained by integrally forming an outward seal lip 51 brought into slidable contact with the inner diameter surface of the cylinder 2 and an inward seal lip 52 brought into slidable contact with the outer side surface in the axial direction of the flange portion 31 of the piston member 3.

In the structure mentioned above, the seal member 6 is attached to the piston member 3 reciprocating in the axial direction within the cylinder 2, however, since the spring characteristic caused by the thinning is applied to the cylindrical portion 42 of the core metal 4 fitted to the piston member 3, it is possible to reduce the fitting and installing force (the assembling load) at a time of fitting the seal member 6 to the piston member 3.

Further, since the slits 44 are provided so as to be arranged uniformly along the circumference of the cylindrical portion 42 of the core metal 4, or the cylindrical portion 42 is formed by the claws 45, or the circular or oval holes 40 are formed at the cylindrical portion 42, it is possible to further reduce the fitting and installing force at a time of fitting the seal member 6 to the piston member 3.

Further, since the convex portion 46 is provided at the cylindrical portion 42, and the concave portion 33 with which the convex portion 46 is engaged is provided at the piston member 3, it is possible to securely prevent the seal member 6 from coming off from the piston member 3, which may be generated by the reduction of the fitting and installing force, and it is possible to remarkably improve the detaching load.

## Claims

1. A sealing device (1) in which a seal member (6) provided with a core metal (4) and a sealing portion (5) is fitted to a piston member (3) reciprocating in an axial direction within a bottomed cylinder (2), wherein a spring characteristic caused by thinning is applied to a cylindrical portion (42) of said core metal (4) fitted to said piston member (3).

2. A sealing device (1) as claimed in claim 1, wherein slits (44) are provided at the cylindrical portion (42) of said core metal (4) so as to be uniformly arranged on a circumference, or wherein the cylindrical portion (42) of said core metal (4) is formed by claws (45).

3. A sealing device as claimed in claim 1 or 2, wherein a convex portion (46) is provided at the cylindrical portion (42) of said core metal (4), and a concave portion (33) with which said convex portion (46) is engaged is provided at said piston member (3).
